# EUROPEAN PATENT SPECIFICATION

(11) **EP 1 523 614 B1**
(45) Date of publication and mention of the grant of the patent: **28.10.2009**
(21) Application number: 03738265.2
(22) Date of filing: 06.06.2003
(51) Int. Cl.: F02B 61/02, F02B 75/06

(54) **MOTORCYCLE ENGINE**
BRENNKRAFTMASCHINE FÜR MOTORRAD
MOTEUR DE MOTOCYCLETTE

(30) Priority: 07.06.2002 GB 0213123; 07.06.2002 GB 0213136; 07.06.2002 GB 0213118; 07.06.2002 GB 0213120; 11.06.2002 GB 0213370; 24.07.2002 GB 0217153; 24.01.2003 GB 0301704
(43) Date of publication of application: 20.04.2005
(73) Proprietor: Brumby Corporation Limited, Douglas, Isle of Man IM1 2BF (GB)
(72) Inventor: SUTER, Eskil, CH-8488 Turbenthal (CH); SUTER, Simon, CH-8488 Turbenthal (CH); GIUSSANI, Alessandro, CH-8488 Turbenthal (CH)
(74) Representative: Jones, John Bryn
(86) International application number: PCT/GB2003/002468
(87) International publication number: WO 2003/104627

(56) References cited:
- FR-A- 2 705 749
- US-A- 3 943 909
- US-A- 4 426 965
- US-A- 5 065 644
- US-A- 5 218 885
- US-A- 5 564 379
- US-A- 5 950 589

## Description

The present invention relates to a motorcycle engine. In particular the invention relates to the layout of shafts in a three-cylinder motorcycle engine.

The use of engines having three cylinders in motorcycles is known; it is also known that first order forces caused by the inertia of the pistons in such an engine may be balanced by using a balancing shaft with appropriate out-of-balance masses and driven such that it rotates at the same speed as the crankshaft. However, the inclusion of an additional shaft in the crankcase increases the weight, complexity and cost of the engine. The present invention seeks to mitigate this disadvantage by utilising the balancing shaft for additional purposes.

There is therefore provided a motorcycle engine comprising a crankshaft which drives a balancing shaft, which in turn drives a gearbox input, the balancing shaft being arranged such that the gearbox input rotates more slowly than the crankshaft.

Providing speed-reduction gearing between the crankshaft and the gearbox input via a balancing shaft reduces the need for further overall speed reduction in the gearbox and final drive train (which may be via a chain, belt or shaft). In particular, reducing the need for speed reduction in a chain or belt drive can permit a smaller rear sprocket or pulley. This can reduce unsprung weight, reduce chain length (and hence stretching over time) and can also permit greater freedom in the design of the rear suspension.

The term "gearbox" is used herein to include any form of variable-ratio transmission, whether or not enclosed in a box or casing.

Preferably, the balancing shaft comprises a first gear by which it is driven and a second gear by which it drives the gearbox input, the first gear being larger than the second gear. In a particularly preferred embodiment, the second gear comprises *n* teeth and the first gear comprises at least *1.5n* and preferably at least *2n* teeth.

The balance shaft may drive the gearbox input via a clutch.

In the preferred embodiments, the required speed reduction may be achieved without the requirement for a particularly small gear on the crankshaft (which would be constrained by the throws of the cranks) or a particularly large clutch primary gear (which would increase the size of the engine).

Preferably, the crankshaft rotates in the opposite sense to the gearbox output For example, the engine may comprise only four shafts: crankshaft, balancing shaft, gearbox input shaft and countershaft (output shaft). The counter-rotation of the crankshaft may afford increased acceleration before the front wheel of the motorcycle leaves the ground by virtue of a torque reaction. It may also result in reduced gyroscopic forces on the motorcycle, because the engine and wheels rotate in opposite directions about parallel axes.

In embodiments comprising only one cylinder or only one bank of cylinders, the cylinder or bank of cylinders is preferably inclined towards the rear of the engine. This may allow the engine to be situated further forwards in the motorcycle.

A balancing mass of the balancing shaft may be disposed adjacent a said gear. A said gear may itself constitute a balancing mass.

The engine may include an oil pump driven via the balancing shaft. The oil pump may be driven via a primary gear of the clutch.

Preferably the oil pump is disposed to the rear of a sump of the engine, and the balancing shaft is disposed above the sump to the rear of the crankshaft.

Specific embodiments will now be described, by way of example only, with reference to the accompanying drawings, in which:
Figure 1A is right side elevation of the engine;
Figure 1B is a left side elevation of the engine shown in Figure 1A;
Figure 1C is a front elevation of the engine shown in the Figures 1A and 1B;
Figure 1D is a rear elevation of the engine shown in Figures 1A to 1C;
Figure 1E is a plan view of the engine shown in Figures 1A to 1 D;
Figure 2A is an end view of the shafts in the engine (including the gearbox);
Figure 2B is a sectional view of the arrangement shown in Figure 2A;
Figure 3 shows a crankshaft and a balancing shaft of an engine;
Figure 4 shows the gears by which the crankshaft of an engine drives the balancing shaft;
Figure 5A is an elevation of the driven end of the balancing shaft of an engine, showing the gear by which the balancing shaft is driven;
Figure 5B is a longitudinal cross-section of the balancing shaft of an engine;
Figure 5C is a perspective view of the balancing shaft shown in Figure 5B;
Figure 6 is a schematic representation of the power train of a motorcycle;
Figure 7 is a schematic representation of the lubrication system of an engine; and
Figure 8 shows the position of elements of a lubrication system with respect to an engine.

### External Overview

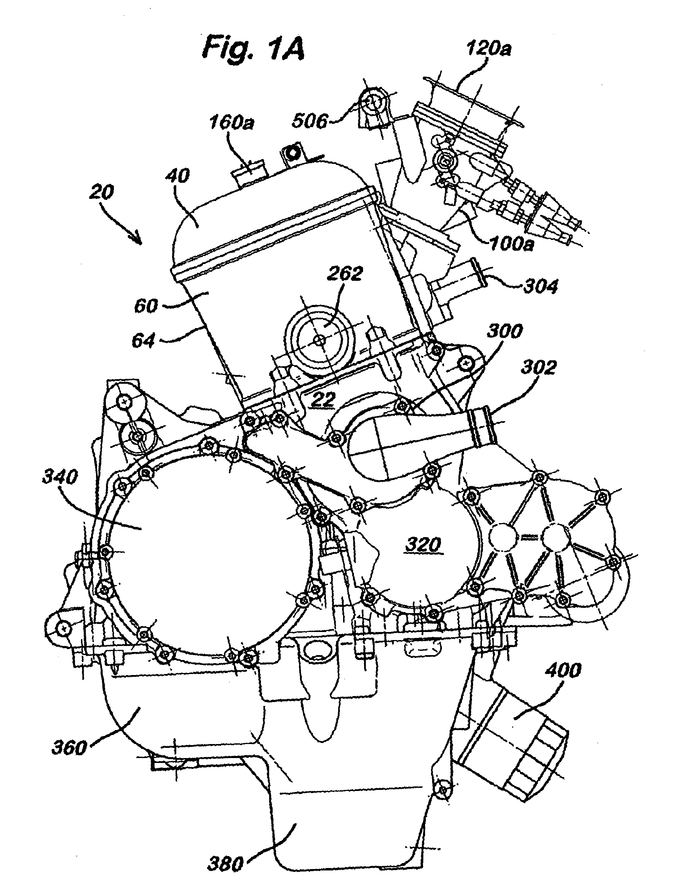

Five external views of a preferred embodiment are shown in Figures 1A to 1E, which are respectively a right side elevation, a left side elevation, a front elevation, a rear elevation and a plan view of the engine.

In overview, the engine is a four-stroke engine 20 comprising three cylinders 80a, 80b, 80c in an in-line configuration, each having a bore and stroke of 88mm and 49.3mm respectively. This oversquare shape may enable the engine to be run at higher speeds.

In an embodiment intended primarily for road use, the combustion chamber of each cylinder (defined by the shape of the cylinder head and the piston crown, and preferably substantially hemispherical) has a size giving rise to a compression ratio of 12:1 to 13:1 or higher. In a further embodiment intended for racing, for example in the World Superbikes Competition, the compression ratio is 1,3:1 to 14:1 or higher.

The engine comprises an engine casing 22, and a cylinder head cover 40 detachably located on a cylinder head 60. The cylinder head 60 comprises three inlet apertures 70a, 70b, 70c which are disposed (in contrast to known production and road motorcycles) on its forward side 62. Attached to the inlet apertures 70 (in an elastic manner, in a preferred embodiment) are respective throttle bodies 100a, 100b, 100c having respective intake trumpets 120a, 120b, 120c. Each intake aperture 70, throttle body 100 and trumpet 120 feeds a respective cylinder 80 as further described below. In the rear side 64 of the cylinder head 60 are disposed three exhaust apertures 200a, 200b, 200c to which are attached respective exhaust passages (not shown). The exhaust apertures 200 are fed by the combustion chambers 82 via two exhaust ports (not shown) per cylinder as further described bellow.

Having the inlet apertures on the forward side of the engine and the exhaust apertures to the rear may allow the exhaust system and the intake system to be disposed at a distance from one another which may overcome or alleviate the problem in known engines in which the intake air is heated by the exhaust gases due to the proximity of the systems to one another. In addition, the exhaust system is remote from the coolant and lubricant radiators (described below) which may result in less heat transfer from the exhaust system to the radiators. The cylinders are angled back from the vertical by 15°. In further embodiments this angle is between 13.5° and 16.5°, and in still further embodiments, it is between 12° and 18°. In yet further embodiments the angle is up to 20° or 25°. As a result, the inlet trumpets 120 point upwards to a greater degree. As a further result, the engine may be located further forward than in known motorcycles allowing for more flexibility in the location of the centre of gravity.

The cylinder head 60 houses two camshafts 240a, 240b driving two inlet and two exhaust valves per cylinder. The valve train is described in further detail below.

The cylinders are each lined by a respective removeable cylinder liner. The use of separate liners may reduce the likelihood of distortion, and such liners may be manufactured, removed and replaced independently of one another and of the cylinder head/engine block and may provide a more reliable solution. Furthermore, the liners may be removed and the engine block reused.

Mounted on the right side of the cylinder block 24 is a water pump 300 for pumping coolant around the engine.

The engine casing 22 comprises a removable crankshaft casing 320, a removable clutch casing 340 and an aperture for a removable sealed gearbox magazine 420.

An oil pump is mounted within a portion 360 of the engine casing. The oil pump draws oil from a sump 380. An oil filter 400 is provided. The lubrication system is described in further detail below.

### Crankshaft and balancing shaft

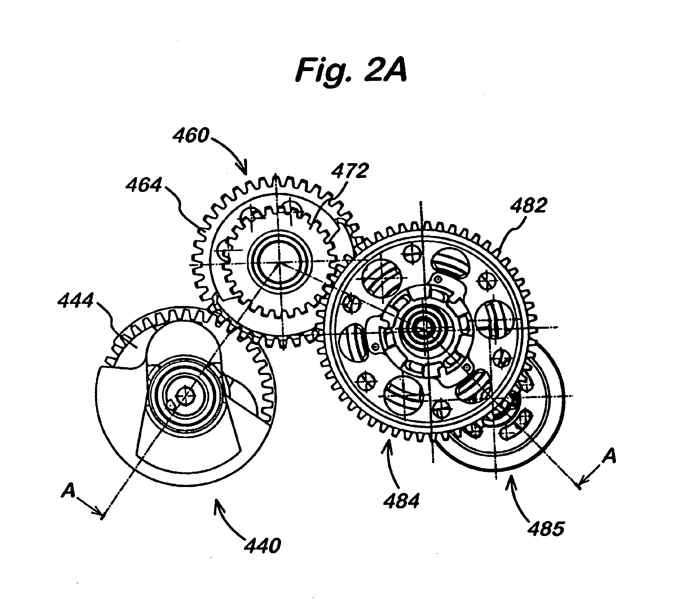

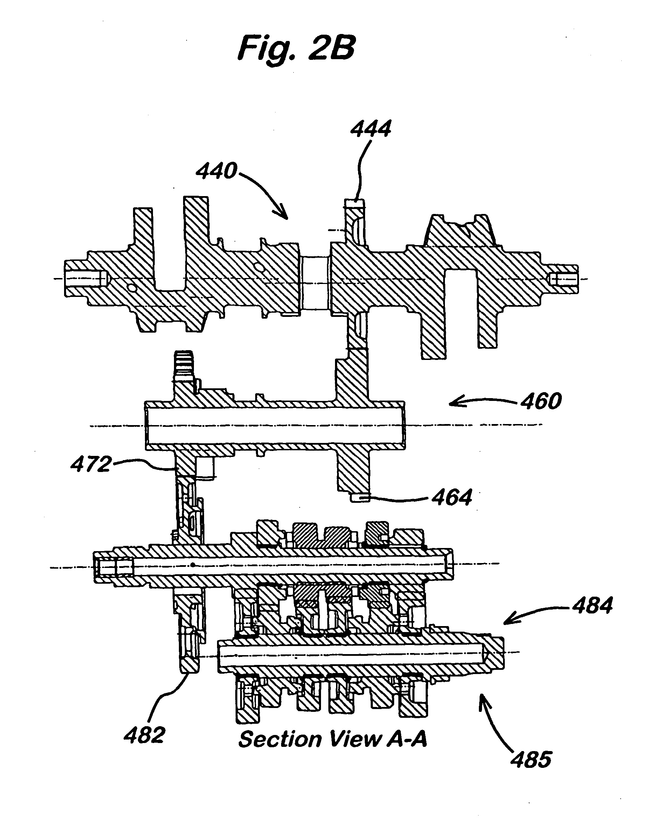

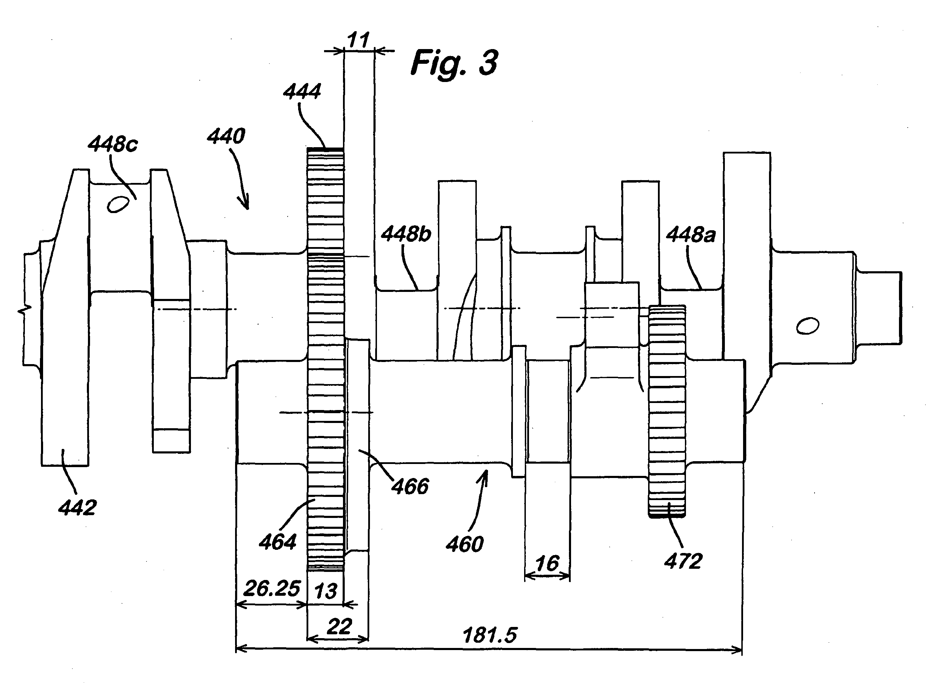

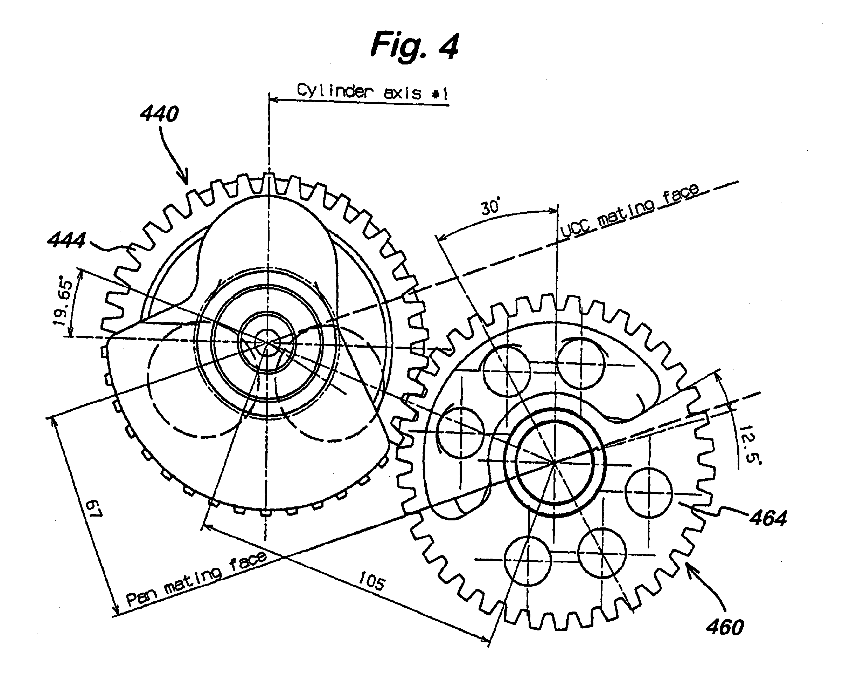

The engine 20 comprises a crankshaft 440 (see Figures 2, 3, 4 and 5A to C). The engine has an even firing order and the three crank pins 448a, b, c on the crankshaft 440 are equally spaced such that forces due to acceleration of reciprocating components are lately balanced in a known manner, either by each other or by extended webs 442 (which in a preferred embodiment comprise heavy metal inserts) on the crankshaft. However, the outside two cylinders 80a, 80c produce an additional torque on the crankshaft which is not cancelled by the reciprocating masses of the pistons or by, the rotating masses of the extended webs 442.

To counter this torque, the engine 20 comprises a balancing shaft 460. The balancing shaft is driven by engagement of a gear 464 on the balancing shaft 460 and a gear 444 on the crankshaft 440. The balancing shaft driving gears 444, 464 have the same size (38 teeth) such that the balancing shaft 460 rotates at the same speed as the crankshaft 440.

The balancing, shaft comprises two balancing masses: the first mass 466 is adjacent the gear 464, and the second mass 468 (which may contain inserts 470 of denser material) is adjacent the end of the balancing shaft remote from the gear 464. In a particularly preferred embodiment in which the balancing shaft is used to drive the gearbox input shaft via the clutch, the second mass 468 is adjacent a balancing shaft primary gear 472 on the balancing shaft. The balancing shaft primary gear 472 is arranged mesh with a clutch primary gear (as described below with reference to Figure 12).

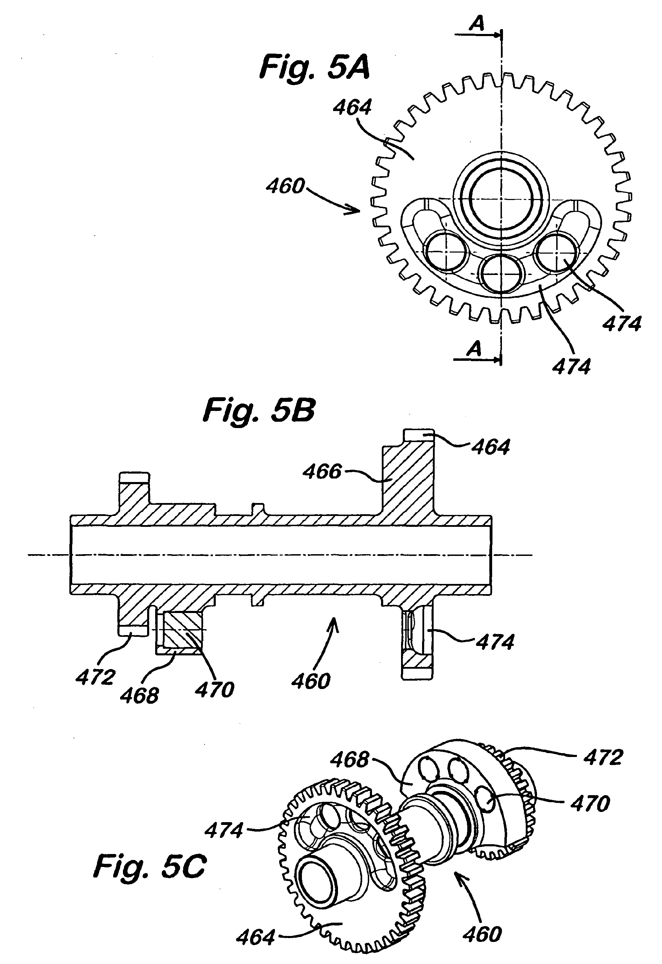

As can be seen (for example, in Figure 5B), the first and second masses 466, 468 are disposed on opposing sides of the balancing shaft 460. In addition to the effect of the first and second masses 466, 468, a further balancing mass is provided by the gear wheels 464, 472. These have one or more cavities or bores (eg. 474 in the gear 464) so as to displace the centre of gravity of the gear wheel from its axis of rotation.

In a preferred embodiment, the webs on the crankshaft have a mass designed to balance the centrifugal forces on the crankshaft to an extent of 50%. This may allow for the use of a small, light crankshaft which is inexpensive to produce and which has low inertia. In preferred refinements of this embodiment, the crankshaft has at least two non-symmetric webs. In a further preferred embodiment, the webs have a mass such that they balance 100% of the centrifugal forces.

In a particularly preferred embodiment (such as that shown in the Figures), the balancing shaft 460 is located above the sump, in contrast to known system using a balancing shaft in which the shaft is located forward of the crankshaft and in which the oil pump is located above the sump. Such a configuration may give rise to a shorter engine length.

In a particularly preferred embodiment, the balancing-shaft-mounted balancing shaft driving gear 464 has a radius greater than that of the further gear 472 (which has 26 teeth).

Additionally, the radius of the second mass 468 is greater than the radius of the further gear 472 (and in particular, the radius of the second mass 468 is greater than the radius of the dedendum circle of the balancing shaft primary gear 472). This may be achieved for example by forming the balancing shaft 460 as an assembly.

As mentioned above, the balancing shaft primary gear 472 on the balancing shaft 460 engages with the clutch primary gear 482. For this reason and since in the preferred embodiment the gearbox 420 is rearward of the crankshaft 440, the balancing shaft 460 is to the rear, and higher than, the crankshaft 440. The engine casing 22 has a single split (not shown) at approximately the level of the shafts to allow for easy assembly and disassembly.

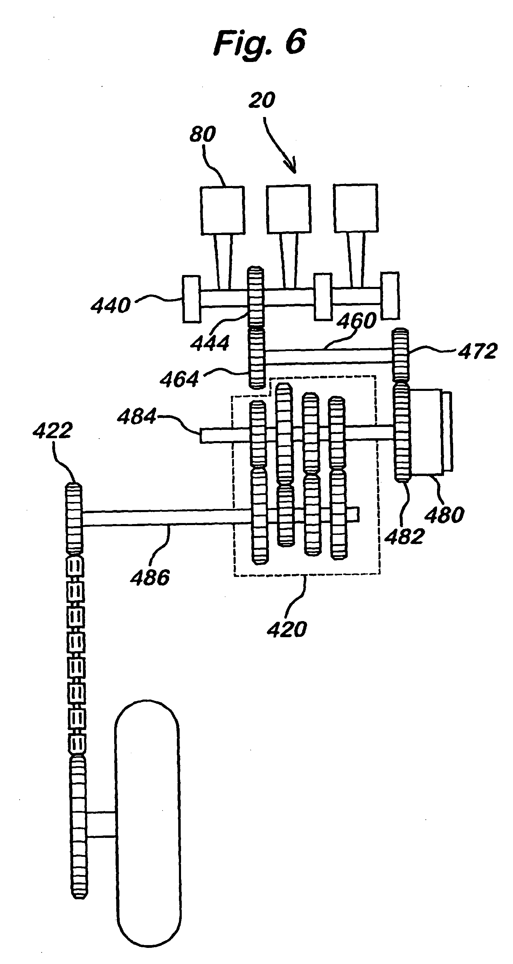

Figure 6 is a schematic diagram of the power train beginning at the engine 20. The cylinders 80 turn the crankshaft 440, which in turn drives the balancing shaft via meshing gears 444, 464. The balancing shaft drives the primary drive which comprises the balancing shaft primary gear 472 and the clutch primary gear 482. This arrangement means that, in order for the sprocket 422 to turn in the correct sense, the crankshaft must turn in the opposite sense to the rotation of the wheels of the motorcycle, in contrast to known motorcycles in which the crankshaft and the gearbox output shaft rotate in the same sense. Such an arrangement may confer the advantage that the rotation of the crankshaft against its inertia serves to increase the downward force on the front wheel of the motorcycle (rather than reducing it as in known motorcycles) resulting in an ability to accelerate a faster rate before the front tyre of the motorcycle leaves the ground. In a particularly preferred embodiment having a weight distribution of approximately 50% on each wheel, the effect is such that an effective mass of approximately 1.5kg is added to the load on the front wheel, which corresponds to an increase of approximately 3 to 4% resulting in an corresponding increase in the acceleration possible before the front wheel leaves the ground.

Figure 2A shows an end view of the shafts in the engine. Figure 2B is a sectional view of the arrangement shown in Figure 2A. As indicated above, the gears by which the balancing shaft is driven (that is the gear 444 on the crankshaft 440 and the gear 464 on the balancing shaft 460) have the same number of teeth: 38 in the embodiment shown in Figure 2. In order to achieve in part the necessary reduction in rotational speed between the crankshaft and the rear wheel, the balancing shaft mounted primary gear 472 is smaller than the gear 464 by which the balancing shaft is, driven, having 26 teeth in the embodiment shown. This gear 472 meshes with the clutch primary gear 482 (which has 53 teeth). Thus, the gearbox input shaft 484 is driven at a speed slightly less than half that of the crankshaft. It is worthy of note that to achieve this same reduction having the clutch driven directly by the crankshaft, the clutch primary gear would have approximately double the diameter of that shown in this embodiment. The final reduction in speed is achieved by a difference in size between the output sprocket 422 and the rear wheel sprocket

### Lubrication

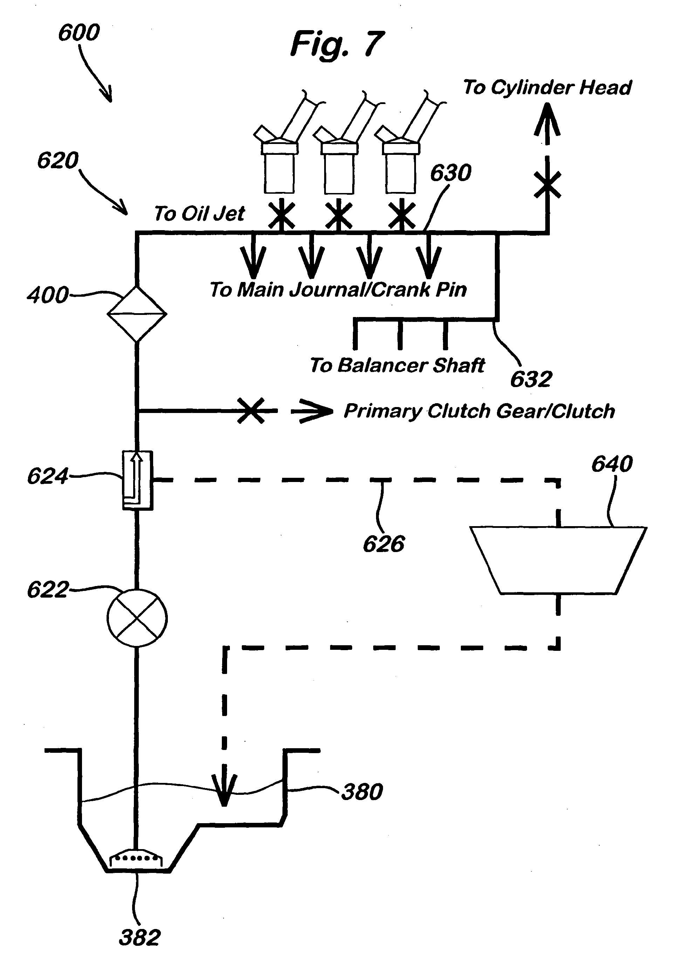

The lubrication system will now be described with reference to Figure 7.

The lubrication system 600 comprises a lubrication circuit 620 and an oil cooling circuit 640.

Oil is pumped from an oil sump 380 into the lubrication circuit 620 inside the engine by an oil pump 622 (preferably a positive-displacement volumetric pump). The oil pump 622 comprises a drive shaft (not shown) carrying a gear which is driven by the clutch primary (input) gear. The oil pump pumps oil, via an oil filter, into the lubrication circuit From the oil filter, oil flows to a main gallery 630, from where lubrication is provided to the crankshaft and to oil jets which spray oil under the pistons. The main gallery also feeds the cylinder head and second gallery 632 from where lubrication is provided to the balancing shaft. Oil is pumped to the clutch primary gear (via a conduit formed by a longitudinal bore 1400 passing through the gearbox input shaft 484) and clutch (not shown). Restrictors are provided upstream of the oil jets, the cylinder head and the clutch primary gear to reduce the oil pressure and rate of flow. Oil from the various lubricated surfaces eventually returns to the oil sump 380.

A pressure relief valve 624 is located in the lubrication circuit close to the oil pump 622. The pressure relief valve is adapted to prevent the oil pressure in the lubrication system rising above a specific threshold. In preferred embodiments, the threshold lies in the region of between 3 and 6 bar (between 3x10⁵ Pa and 6x10⁵ Pa) In particularly preferred embodiments, the threshold is in the region of 4 to 5 bar (4x10⁵ Pa to 5x10⁵ Pa). The pressure relief valve 624 comprises a relief outlet connected via a conduit 626, for example in the preferred embodiment a pipe, to the oil cooling circuit 640, and a spring preloaded piston moveable from a closed position to an open position in which it allows oil to escape via an orifice in the relief outlet.

When the oil pressure in the lubrication circuit 620 exceeds the specific threshold, the pressure relief valve 624 opens, allowing some oil to pass via the relief outlet into the conduit 626 and from there into the oil cooling circuit 640. This has the effect of reducing the oil pressure in the lubrication circuit 620. When the oil pressure in the lubrication circuit falls below the specific threshold, the pressure relief valve closes, preventing further oil from escaping into the oil cooling circuit

In a preferred embodiment, the oil cooling circuit 640 comprises a heat exchanger or radiator mounted near the engine on the motorcycle. Oil flowing through the oil cooling circuit 640 is cooled and returned to the sump 380 from where it is pumped back into the lubrication circuit by the oil pump 622. Since the oil cooling circuit is open to the sump, the oil pressure in the oil cooing circuit is low.

The oil pump 622 is driven by the clutch primary gear (482 in Figure 6), and the volume of oil it generates is proportional to the engine speed. For a given oil temperature, the oil pressure produced by the pump depends on the resistance of the lubrication circuits downstream of the pump to the flow generated by the pump. At low engine speeds (for example at an idling speed of around 1000 rpm), the oil pump does not generate sufficient oil pressure for any oil to escape via the pressure relief valve into the oil cooling circuit. This, however, does not present a problem since, at low engine speeds, the engine is generating less heat, and hence the oil, will be relatively cool.

At higher engine speeds, the temperature of the engine and the oil will generally be higher. Once the engine reaches a speed sufficient to cause the oil pressure to rise above the threshold of the pressure relief valve 624 (at approximately 4000 rpm), the pressure relief valve opens and allows some oil into the oil cooling circuit 640 to be cooled.

In this manner, the oil cooling system is only used when needed. At higher engine speeds the oil pump pumps more oil, thus generating higher oil pressure. The amount of oil fed to the oil cooling circuit is determined by the oil pressure generated by the oil pump, and is hence related to the engine speed. Since the engine speed also partially determines the temperature of the engine (and hence of the oil), an indirect relationship exists between the oil temperature and the amount of oil passing through the oil cooling circuit. This provides for a lubrication system in which oil temperature is automatically regulated dependent upon engine speed.

Because the oil cooling circuit is separated from the lubrication circuit by the pressure relief valve, the oil pressure in the oil cooling circuit is also always significantly lower than the oil pressure in the lubrication circuit. This can mean that damage to the exposed parts of the lubrication system as a whole (for example, the radiator and connecting pipes) does not result in a sudden and catastrophic loss of oil. For example, debris such as stones flung up from the road surface by the front wheel of the motorcycle might puncture the oil cooling radiator. If the oil in the radiator were at high pressure, all of the oil soon would be lost, immediately disabling the motorcycle. In contrast, a slow leak under low pressure may give the rider sufficient time to proceed to his destination or to a garage before all oil is lost.

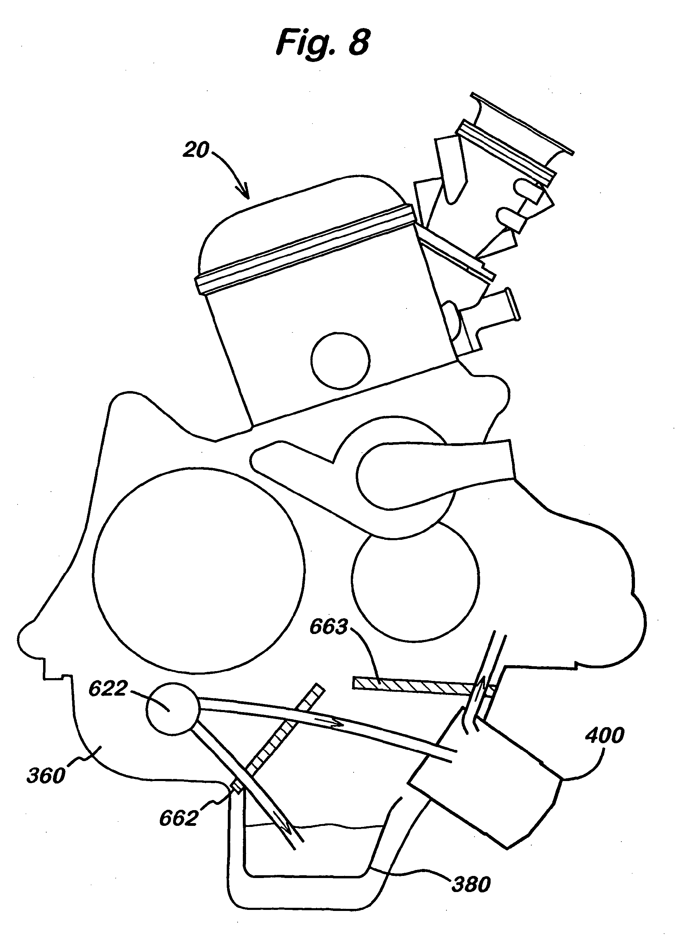

The arrangement of elements of the lubrication system will now be described in more detail with reference to Figure 8, which shows a schematic of elements of the lubrication system in relation to a simplified outline of the engine 16.

In contrast to conventional motorcycle engines where the oil pump is often located just above the sump, in a preferred embodiment, the oil pump 622 is located below the gearbox to the rear of the sump 380. This allows for the balancing shaft (460 in Figure 12 for example) to be positioned above the sump as described elsewhere.

In a preferred embodiment, the oil pump 622 draws oil from the sump 380 through a strainer 382.

In a particular embodiment, a baffle 662 is located between the sump 380 and the oil pump portion 3 60 of the engine casing. The sump itself is relatively deep. The deep sump in conjunction with the baffle prevents or inhibits oil from leaving the sump under acceleration and in the event that the front of the motorcycle is raised off the ground, resulting in the engine being at an angle to the normal upright position shown. It is thereby ensured that sufficient oil remains in the sump to be pumped into the lubricating circuit in such circumstances. In a particularly preferred embodiment, the baffle together with the internal walls of the engine casing form a cavity with a forward facing opening (enclosed within the engine casing), such that if the engine should be inclined backwards, the cavity fills with oil.

In further embodiments, an additional/alternative baffle is provided towards the front of the sump, for preventing or inhibiting oil from leaving the sump under deceleration.

In a further preferred embodiment, there are disposed in the sump a plurality of baffles generally arranged to inhibit movement of the oil in the sump.

A further baffle 663 is provided which prevents the gases being expelled from the bottom end of the cylinders on the down stroke of the respective pistons from passing directly into the sump and causing the oil in the sump to be displaced or to foam.

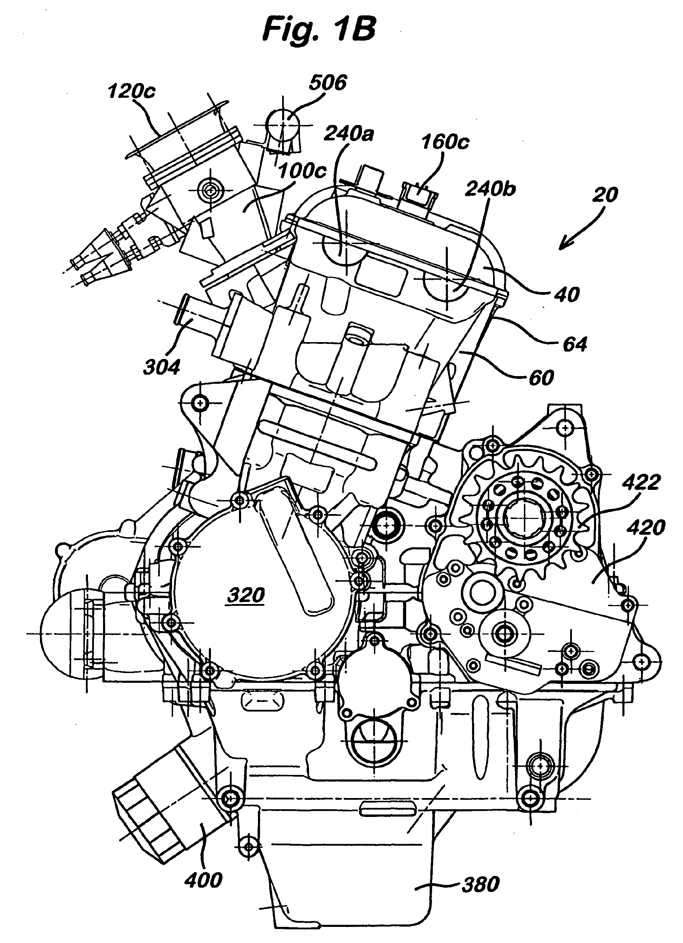

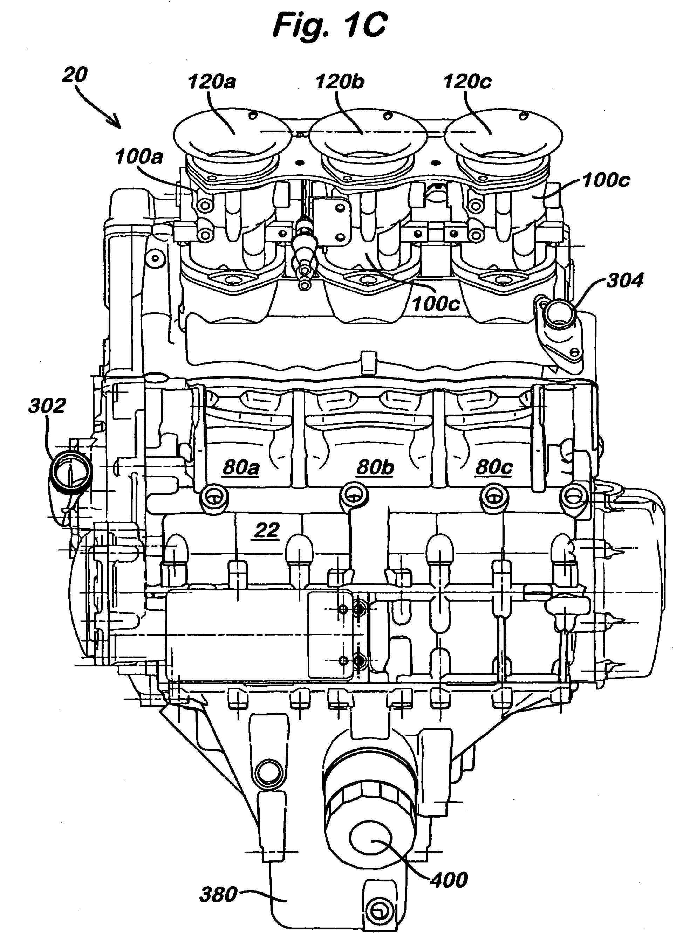

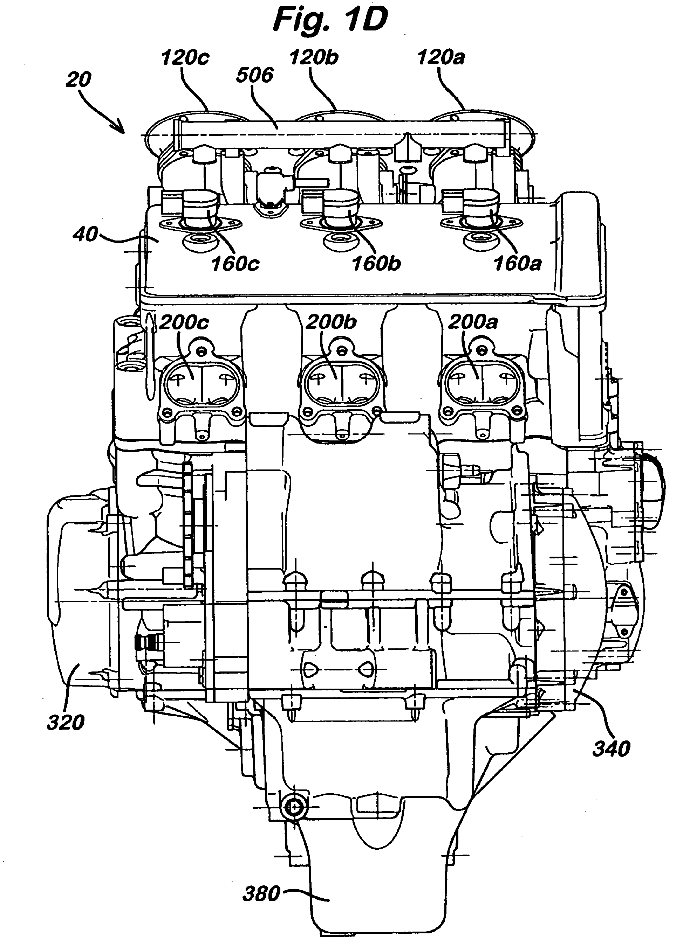

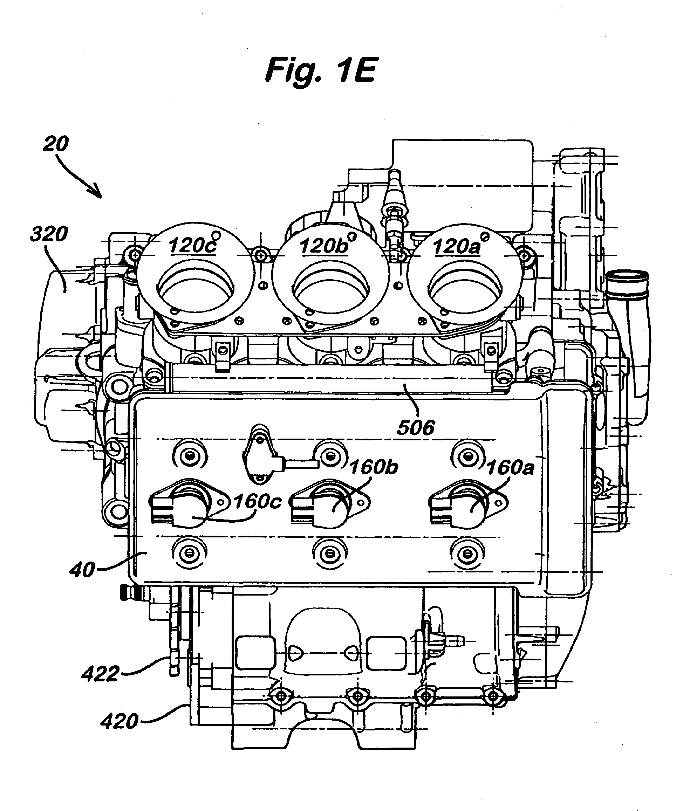

In a further preferred embodiment, the depth and shape of the sump is substantially as shown for example in Figures 1 and 2.

In a preferred embodiment, the lubrication system described provides lubrication to all parts of the engine excluding the gearbox. The gearbox is a self-contained separately lubricated unit as shown in Figure 6.

The engine 20 (including the balancing shaft 460 and the balancing shaft primary gear 472) and the clutch primary gear 482, are lubricated by the lubrication system 600 as described above.

With the exception of the driven end of the gearbox input shaft 484, the gearbox is enclosed entirely in a gearbox casing. An oil bath is provided inside the gearbox 420. The motion of the gears dipping into the oil bath generates an oil mist which is spread throughout the gearbox, ensuring sufficient lubrication of components within the gearbox, as known per se.

The gearbox is constructed as an extractable constant-mesh magazine. The gearbox comprises an input shaft 484 (or mainshaft) driven by a clutch 480 and an output shaft 486 (or countershaft).

Statements in this specification of the "objects of the invention" relate to preferred embodiments of the invention, but not necessarily to all embodiments of the invention falling within the claims

The description of the invention with reference to the drawings is by way of example only.

## Claims

1. A motorcycle engine comprising a crankshaft which drives a balancing shaft, which in turn drives a gearbox input, the balancing shaft being arranged such that the gearbox input rotates more slowly than the crankshaft.

2. An engine according to claim 1, wherein the balancing shaft comprises a first gear by which it is driven and a second gear by which it drives the gearbox input, the first gear being larger than the second gear.

3. An engine according to claim 2, wherein the second gear comprises *n* teeth and the first gear comprises at least 1.5*n* and preferably at least 2*n* teeth.

4. An engine according to any of claims 1 to 3, wherein the balancing shaft drives the gearbox input via a clutch.

5. An engine according to any of the preceding claims, further comprising a gearbox output for driving a rear wheel of a motorcycle, wherein the crankshaft rotates in the opposite sense to the gearbox output.

6. An engine according to any of the preceding claims, comprising only one cylinder or only one bank of cylinders, wherein the cylinder or bank of cylinders is inclined towards the rear of the engine.

7. An engine according to claim 2, wherein a balancing mass of the balancing shaft is disposed adjacent a said gear.

8. An engine according to claim 2, wherein a said gear itself constitutes a balancing mass.

9. An engine according to any preceding claim comprising an oil pump driven via the balancing shaft.

10. An engine according to claims, 4 and 9, wherein the oil pump is driven via a primary gear of the clutch.

11. An engine according to claim 9 or 10, wherein the oil pump is disposed to the rear of a sump of the engine, and the balancing shaft is disposed above the sump to the rear of the crankshaft.

## Patentansprüche

1. Motorradmotor mit einer Kurbelwelle, die eine Ausgleichswelle antreibt, die ihrerseits einen Getriebeeingang antreibt, wobei die Ausgleichswelle so angeordnet ist, daß der Getriebeeingang langsamer als die Kurbelwelle dreht.

2. Motor nach Anspruch 1, wobei die Ausgleichswelle ein erstes Rad, durch das sie angetrieben wird, und ein zweites Rad aufweist, durch das sie den Getriebeeingang antreibt, wobei das erste Rad größer als das zweite Rad ist.

3. Motor nach Anspruch 2, wobei das zweite Rad n Zähne aufweist und das erste Rad mindestens 1,5n und vorzugsweise mindestens 2n Zähne aufweist.

4. Motor nach einem der Ansprüche 1 bis 3, wobei die Ausgleichswelle den Getriebeeingang über eine Kupplung antreibt.

5. Motor nach einem der vorstehenden Ansprüche, ferner mit einem Getriebeausgang zum Antreiben eines Hinterrads eines Motorrads, wobei die Kurbelwelle gegenläufig zum Getriebeausgang dreht.

6. Motor nach einem der vorstehenden Ansprüche mit nur einem Zylinder oder nur einer Zylinderreihe, wobei der Zylinder oder die Zylinderreihe zur Rückseite des Motors geneigt ist.

7. Motor nach Anspruch 2, wobei eine Ausgleichsmasse der Ausgleichswelle benachbart zu einem Rad angeordnet ist.

8. Motor nach Anspruch 2, wobei ein Rad selbst eine Ausgleichsmasse bildet.

9. Motor nach einem vorstehenden Anspruch mit einer Ölpumpe, die über die Ausgleichswelle angetrieben wird.

10. Motor nach den Ansprüchen 4 und 9, wobei die Ölpumpe über ein Primärrad der Kupplung angetrieben wird.

11. Motor nach Anspruch 9 oder 10, wobei die Ölpumpe zur Rückseite eines Sumpfs des Motors angeordnet ist und die Ausgleichswelle über dem Sumpf zur Rückseite der Kurbelwelle angeordnet ist.

## Revendications

1. Moteur de motocyclette comprenant un vilebrequin qui entraîne un arbre d'équilibrage, lequel entraîne à son tour une entrée de boîte d'engrenages, l'arbre d'équilibrage étant agencé de sorte que l'entrée de boîte d'engrenages tourne plus lentement que le vilebrequin.

2. Moteur selon la revendication 1, dans lequel l'arbre d'équilibrage comprend une première roue d'engrenage par laquelle il est entraîné et une seconde roue d'engrenage par laquelle il entraîne l'entrée de boîte d'engrenages, la première roue d'engrenage étant plus grande que la seconde roue d'engrenage.

3. Moteur selon la revendication 2, dans lequel la seconde roue d'engrenage comprend n dents et la première roue d'engrenage comprend au moins 1,5n et de préférence au moins 2n dents.

4. Moteur selon l'une quelconque des revendications 1 à 3, dans lequel l'arbre d'équilibrage entraîne l'entrée de boîte d'engrenages par l'intermédiaire d'un embrayage.

5. Moteur selon l'une quelconque des revendications précédentes, comprenant en outre une sortie de boîte d'engrenages pour entraîner une roue arrière d'une motocyclette, dans lequel le vilebrequin tourne dans le sens opposé à la sortie de boîte d'engrenages.

6. Moteur selon l'une quelconque des revendications précédentes, comprenant uniquement un cylindre ou uniquement une rangée de cylindres, dans lequel le cylindre ou la rangée de cylindres est incliné vers l'arrière du moteur.

7. Moteur selon la revendication 2, dans lequel une masse d'équilibrage de l'arbre d'équilibrage est disposée de manière adjacente à une dite roue d'engrenage.

8. Moteur selon la revendication 2, dans lequel une dite roue d'engrenage constitue elle-même une masse d'équilibrage.

9. Moteur selon l'une quelconque des revendications précédentes comprenant une pompe à huile entraînée par l'arbre d'équilibrage.

10. Moteur selon les revendications 4 et 9, dans lequel la pompe à huile est entraînée par une roue d'engrenage primaire de l'embrayage.

11. Moteur selon la revendication 9 ou 10, dans lequel la pompe à huile est disposée à l'arrière d'un carter du moteur, et l'arbre d'équilibrage est disposé au-dessus du carter jusqu'à l'arrière du vilebrequin.
